# FASCICULE DE BREVET EUROPEEN

(11) **EP 4 005 380 B1**
(45) Date de publication et mention de la délivrance du brevet: **19.07.2023**
(21) Numéro de dépôt: 21205286.4
(22) Date de dépôt: 28.10.2021
(51) Int. Cl.: A01M 7/00

(54) **SYSTÈME DE PULVÉRISATION POUR ENGIN AGRICOLE COMPRENANT UNE VANNE DE RÉGULATION**
SPRÜHSYSTEM FÜR LANDWIRTSCHAFTLICHE MASCHINE, DAS EIN EINSTELLVENTIL UMFASST
SPRAYING SYSTEM FOR AGRICULTURAL MACHINE COMPRISING A CONTROL VALVE

(30) Priorité: 25.11.2020 FR 2012124
(43) Date de publication de la demande: 01.06.2022
(73) Titulaire: Exel Industries, 51200 Epernay (FR)
(72) Inventeur: COLOMBEL, Sylvain, 75009 PARIS (FR); COCATRIX, Michel, 75009 PARIS (FR); PANET, Jérôme, 75009 PARIS (FR)
(74) Mandataire: Argyma

(56) Documents cités:
- EP-A1- 3 269 242
- EP-B1- 2 671 447
- EP-B1- 2 671 448
- DE-U1-202016 008 837

## Description

### DOMAINE TECHNIQUE

L'invention concerne un système de pulvérisation pour engin agricole selon le préambule de la revendication 1, ainsi qu'un procédé de pilotage d'un tel système de pulvérisation selon le préambule de la revendication 6.

### ÉTAT DE LA TECHNIQUE ANTÉRIEURE

Il existe de manière connue, par exemple de EP 2 671 448 B1, des systèmes de pulvérisation pour engin agricole comprenant une rampe de pulvérisation et un circuit de liquide comprenant lui-même une pompe et, en aval de ladite pompe, des voies de refoulement. Chacune des voies de refoulement est par ailleurs reliée à la pompe par l'intermédiaire d'une vanne de refoulement prévue pour ouvrir et pour fermer ladite voie de refoulement.

L'une au moins des voies de refoulement remplit par exemple une fonction de pulvérisation agricole du système de pulvérisation : elle comprend pour cela des buses de pulvérisation montées sur la rampe de pulvérisation et prévues pour pulvériser du liquide, notamment du liquide de traitement, sur des végétaux à traiter d'un champ. Cette voie de refoulement comprend en outre une vanne de régulation montée en dérivation des buses de pulvérisation et prévue pour réguler un débit de liquide alimentant les buses de pulvérisation, notamment en renvoyant tout ou partie du liquide circulant dans cette voie de refoulement vers une cuve qui alimente la pompe en liquide, notamment en liquide de traitement.

D'autres fonctions du système de pulvérisation sont remplies par les autres voies de refoulement, notamment au moyen d'organes hydrauliques. Or, le fonctionnement de ces organes hydrauliques est souvent sensible aux surpressions, de sorte qu'une soupape commune à ces autres voies de refoulement est généralement prévue. Cette soupape communique, en amont, avec chacune des autres voies de refoulement, en parallèle de leurs organes hydrauliques, et, en aval, avec la cuve. Cette soupape est encore dimensionnée pour s'ouvrir lorsqu'une pression de liquide dans ces autres voies de refoulement est supérieure à une pression maximale prédéfinie.

La mise en oeuvre de cette soupape est toutefois problématique pour plusieurs raisons.

D'abord, cette soupape a un comportement différent en fonction du débit de liquide en aval de la pompe, ce qui implique notamment un dimensionnement différent de la soupape en fonction de la pompe choisie pour le système de pulvérisation mais aussi de prévoir un dimensionnement de la soupape adapté à tous régimes de la pompe pendant le fonctionnement du système de pulvérisation. Cela rend le dimensionnement de la soupape à la fois contraignant et délicat.

Ensuite, si cette soupape s'ouvre dès que la pression de liquide dans les autres voies de refoulement atteint la pression maximale, un retard est souvent observé pour sa fermeture, lorsque la pression de liquide dans les autres voies de refoulement redevient inférieure à la pression maximale. Cela crée des chutes de pression dans le circuit de liquide qui entravent le fonctionnement du système de pulvérisation.

De plus, cette soupape étant commune aux autres voies de refoulement, la définition de la pression maximale relève nécessairement d'un compromis entre les exigences des différents organes hydrauliques, de sorte que les organes hydrauliques ne peuvent pas fonctionner de manière optimale. Cela peut avoir des conséquences néfastes sur le fonctionnement du système de pulvérisation.

Cette soupape peut aussi être responsable de coups de bélier dans le circuit de liquide, entraînant des détériorations importantes du circuit de liquide.

Enfin, la mise en oeuvre de cette soupape est nécessairement liée à une perte de compacité du circuit de liquide et crée des volumes « morts » ou « résiduels » dans le circuit de liquide. Il en résulte une augmentation de la quantité de déchets et une plus grande perte de liquide, notamment de liquide de traitement, lors du fonctionnement du système de pulvérisation. Cela n'est pas souhaitable, ni du point de vue environnemental, ni du point de vue économique pour un agriculteur mettant en oeuvre le système de pulvérisation.

### EXPOSÉ DE L'INVENTION

La présente invention a pour but de pallier un ou plusieurs des inconvénients mentionnés ci-dessus.

A cet effet, l'invention a pour objet un système de pulvérisation pour engin agricole, comprenant une rampe de pulvérisation et un circuit de liquide comprenant lui-même :
- une pompe comprenant une entrée et une sortie, la pompe étant conçue pour aspirer un liquide par l'entrée et pour refouler le liquide aspiré à travers la sortie,
- des voies de refoulement chacune reliées, en amont, à la sortie de la pompe par l'intermédiaire d'une vanne de refoulement conçue pour ouvrir et pour fermer ladite voie de refoulement, l'une au moins des voies de refoulement, dite principal, comprenant des buses de pulvérisation montées sur la rampe de pulvérisation et conçues pour pulvériser du liquide sur des végétaux à traiter d'un champ, la ou les autres voies de refoulement, dite secondaire, étant dépourvues de buses de pulvérisation montées sur la rampe de pulvérisation,
- une vanne de régulation, reliée, en amont, à la sortie de la pompe et, en aval, à l'entrée de la pompe, la vanne de régulation étant en outre conçue pour réguler sélectivement, en fonction de la ou desdites voies de refoulement ouvertes, un débit de liquide dans la ou les voies de refoulement ouvertes à un débit de régulation prédéterminé, ou une pression de liquide dans la ou les voies de refoulement ouvertes à une première pression de régulation prédéterminée.

Selon l'invention, ce système de pulvérisation comprend en outre une unité de commande conçue pour commander la vanne de régulation de réguler en débit la ou les voies de refoulement ouvertes, lorsque l'une au moins des voies de refoulement ouvertes est prédéterminée comme étant à réguler en débit, et de réguler en pression la ou les voies de refoulement ouvertes, lorsqu'aucune de la ou des voies de refoulement ouvertes n'est prédéterminée comme étant à réguler en débit.

Selon des variantes de réalisation qui peuvent être prises ensemble ou séparément :
- la ou les voies de refoulement principal sont prédéterminées comme étant à réguler en débit et la ou les voies de refoulement secondaire sont prédéterminées comme étant à réguler en pression ;
- la vanne de régulation comprend un corps de vanne définissant une chambre d'air et une chambre de liquide séparées l'une de l'autre par un tiroir comprenant un siège agencé dans la chambre de liquide, la chambre de liquide comprend un orifice d'entrée communiquant avec la sortie de la pompe et un orifice de sortie communiquant avec l'entrée de la pompe, le tiroir étant en outre apte à se déplacer dans le corps de vanne, en fonction d'une différence entre une pression d'air dans la chambre d'air et une pression du liquide circulant dans la chambre de liquide, depuis l'orifice d'entrée vers l'orifice de sortie, de manière à approcher ou à éloigner le siège de l'orifice de sortie ;
- le système de pulvérisation comprend une unité de commande conçue pour :
   ∘ déterminer une ou des voies de refoulement fermées à ouvrir et une ou des voies de refoulement ouvertes à fermer ;
   ∘ diminuer la pression d'air dans la chambre d'air de la vanne de régulation ;
   ∘ ouvrir la ou les voies de refoulement fermées à ouvrir et fermer la ou les voies de refoulement ouvertes à fermer, simultanément ou successivement, dans un ordre ou dans l'autre ;
   ∘ augmenter la pression d'air dans la chambre d'air de la vanne de régulation jusqu'à ce que sélectivement, en fonction de la ou des voies de refoulement ainsi ouvertes :
      ▪ le débit de liquide circulant dans la ou les voies de refoulement ouvertes atteigne le débit de régulation,
         ou
      ▪ la pression de liquide circulant dans la ou les voies de refoulement 14a-14g ouvertes atteigne la première pression de régulation ;
- l'unité de commande est conçue pour diminuer la pression d'air dans la chambre d'air de la vanne de régulation pendant une période cible prédéterminée ou jusqu'à atteindre une pression cible prédéterminée.

L'invention a aussi pour objet un procédé de pilotage d'un système de pulvérisation pour engin agricole tel que précédemment décrit, comprenant une étape de régulation sélective, au moyen de la vanne de régulation, en fonction de la ou des voies de refoulement ouvertes, du débit de liquide circulant dans la ou les voies de refoulement ouvertes au débit de régulation, ou de la pression de liquide circulant dans la ou les voies de refoulement ouvertes à la première pression de régulation.

Selon l'invention, pendant l'étape de régulation sélective, le débit de liquide circulant dans la ou les voies de refoulement ouvertes, est régulé au débit de régulation, lorsque la ou l'une au moins des voies de refoulement ouvertes est prédéterminée comme étant à réguler en débit, et la pression de liquide circulant dans la ou les voies de refoulement ouvertes est régulée à la première pression de régulation, lorsqu'aucune de la ou des voies de refoulement ouvertes n'est prédéterminée comme étant à réguler en débit.

Selon des variantes de réalisation qui peuvent être prises ensemble ou séparément :
- le procédé comprend, préalablement à l'étape de régulation sélective :
   ∘ une étape de détermination d'une ou de voies de refoulement fermées à ouvrir et d'une ou de voies de refoulement ouvertes à fermer ;
   ∘ une étape de diminution de la pression d'air dans la chambre d'air de la vanne de régulation ;
   ∘ une étape d'ouverture de la ou des voies de refoulement fermées à ouvrir et de fermeture de la ou des voies de refoulement ouvertes à fermer, simultanément ou successivement, dans un ordre ou dans l'autre ;
   ∘ une étape d'augmentation de la pression d'air dans la chambre d'air de la vanne de régulation jusqu'à ce que, sélectivement, en fonction de la ou des voies de refoulement ainsi ouvertes, le débit de liquide circulant dans la ou les voies de refoulement ouvertes atteigne le débit de régulation, ou la pression de liquide circulant dans la ou les voies de refoulement ouvertes atteigne la première pression de régulation ;
      - pendant l'étape de diminution, la pression d'air dans la chambre d'air de la vanne de régulation est diminuée pendant une période cible prédéterminée ou jusqu'à atteindre une pression cible prédéterminée.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est une vue schématique d'un système de pulvérisation pour engin agricole, selon un mode de réalisation de l'invention ;
- la figure 2 est une vue de détail d'une vanne de régulation du système de pulvérisation pour engin agricole ;
- la figure 3 est un ordinogramme d'un procédé de pilotage du système de pulvérisation illustré à la figure 1.

### DESCRIPTION DETAILLEE

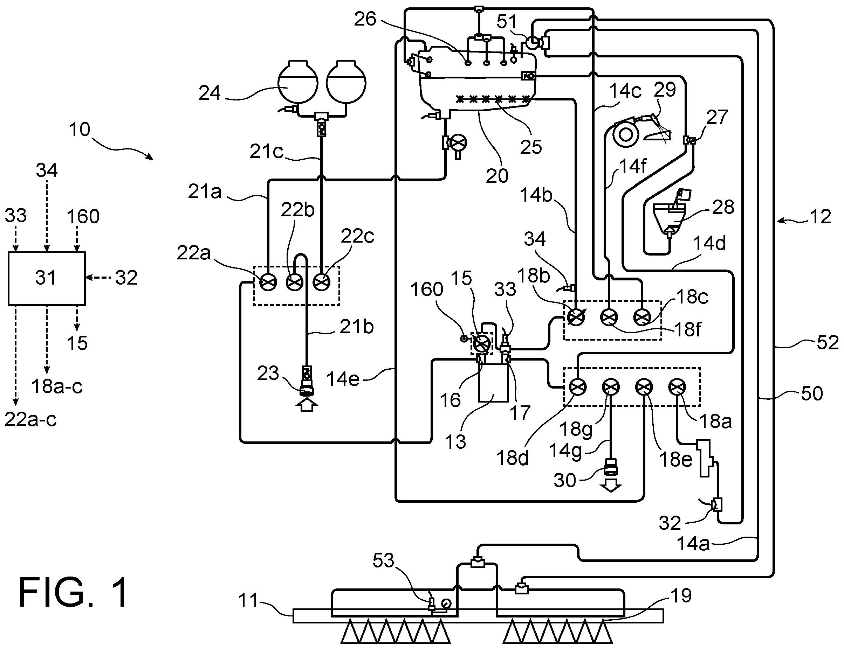

La figure 1 montre un système de pulvérisation 10 pour engin agricole, notamment destiné à pulvériser un liquide de traitement dans un champ de végétaux à traiter, par exemple de grandes cultures, telles que la culture de céréales, selon un mode de réalisation de l'invention.

Le système de pulvérisation 10 est en contact avec un sol, notamment du champ de végétaux à traiter, par exemple par l'intermédiaire de roues (non représentées) permettant son déplacement.

Le système de pulvérisation 10 est par exemple destiné à être tracté par l'engin agricole, tel qu'un tracteur. En variante (non représentée), le système de pulvérisation 10 est destiné à être porté par l'engin agricole. Encore en variante (non représenté), le système de pulvérisation 10 est automoteur et forme donc l'engin agricole.

Il est adopté à titre non limitatif un repère orthogonal comprenant une direction longitudinale vers l'avant dans le sens d'avancement de l'engin agricole, une direction transversale vers la gauche et une direction verticale vers le haut. Les directions longitudinale et transversale sont horizontales, globalement parallèles au sol.

Le système de pulvérisation 10 comprend une rampe de pulvérisation 11 s'étendant par exemple suivant une direction d'extension principale horizontale, notamment globalement transversale, et un circuit de liquide 12.

Le circuit de liquide 12 comprend une pompe 13, des voies de refoulement 14a-14g, ainsi qu'une vanne de régulation 15.

La pompe 13 comprend une entrée 16 par laquelle la pompe 13 aspire un liquide et une sortie 17 par laquelle la pompe 13 refoule le liquide aspiré par l'entrée 16.

En variante, le circuit de liquide 12 peut comprendre, en plus de la pompe 13, une autre pompe. La pompe 13 et l'autre pompe sont montées en parallèle l'une par rapport à l'autre.

Dans la suite de la description, les termes « amont » et « aval » tiennent compte du sens de circulation du liquide dans le circuit de liquide 12, qui est imposé par la pompe 13.

Les voies de refoulement 14a-14g sont chacune reliées, en amont, à la sortie 17 de la pompe 13 par l'intermédiaire d'une vanne de refoulement 18a-18g conçue pour ouvrir et pour fermer ledit voie de refoulement 14a-14g.

Une vanne de refoulement 18a-18g différente relie par exemple chaque voie de refoulement 14a-14g à la sortie 17 de la pompe 13. Une ou plusieurs vanne de refoulement 18a-18g communes à plusieurs voies de refoulement 14a-14g peuvent aussi relier lesdites voies de refoulement 14a-14g à la sortie 17 de la pompe 13.

Chacune des voies de refoulement 14a-14g peut assurer une fonction distincte du système de pulvérisation 10. C'est par exemple le cas du système de pulvérisation 10 illustré à la figure 1.

L'une 14a au moins des voies de refoulement 14a-14g, dite principal, comprend des buses de pulvérisation 19 montées sur la rampe de pulvérisation 11 et conçues pour pulvériser du liquide, notamment du liquide de traitement comme cela sera expliqué dans la suite la description, sur les végétaux à traiter du champ. La ou les voies de refoulement principal 14a assurent ainsi une fonction de pulvérisation agricole du système de pulvérisation agricole 10.

La ou les autres voies de refoulement 14b-14g, dite secondaire, sont dépourvues de buses de pulvérisation montées sur la rampe de pulvérisation 11. La ou les autres voies de refoulement 14b-14g assurent ainsi des fonctions du système de pulvérisation 10 autres que la fonction de pulvérisation agricole. Ces autres fonctions du système de pulvérisation 10 seront détaillées dans la suite de la description.

Selon l'invention, la vanne de régulation 15 est reliée, en amont, à la sortie 17 de la pompe 13 et, en aval, à l'entrée 16 de la pompe 13. La vanne de régulation 15 est ainsi montée en parallèle des voies de refoulement 14a-14g et forme une boucle avec la pompe 13. La vanne de régulation 15 est en outre conçue pour réguler sélectivement, en fonction de la ou desdites voies de refoulement 14a-14g ouvertes, un débit de liquide dans la ou les voies de refoulement 14a-14g ouvertes à un débit de régulation prédéterminé, ou une pression de liquide dans le ou les voies de refoulement 14a-14g ouvertes à une première pression de régulation prédéterminée.

Grâce à la vanne de régulation 15, il est ainsi possible d'opter pour une régulation en débit ou en pression en fonction des voies de refoulement 14a-14g ouvertes, et donc en fonction de la fonction du système de pulvérisation 10 qui est activée. La régulation la plus appropriée par voie de refoulement 14a-14g, et donc par fonction du système de pulvérisation 10, peut ainsi être mise en oeuvre.

Par exemple, lorsque la ou les voies de refoulement principal 14a sont ouvertes, la fonction de pulvérisation agricole étant activée, la vanne de régulation 15 peut réguler la ou lesdites voies de refoulement principal 14a en débit, de manière à commander la quantité de liquide refoulé par la pompe 13 qui alimente les buses de pulvérisation 19. Une régulation en pression de la ou des voies de refoulement principal 14a peut aussi être appropriée.

Lorsque la ou les voies de refoulement secondaire 14b-14g sont ouvertes et que la ou les voies de refoulement principal 14a sont fermées, une ou d'autres fonctions que la fonction de pulvérisation agricole étant activées, la vanne de régulation 15 peut réguler la ou lesdites voies de refoulement secondaire 14b-14g en pression. La régulation en pression est par exemple plus appropriée qu'une régulation en débit lorsque les voies de refoulement secondaire 14b-14g comprennent des organes hydrauliques conçus pour fonctionner sur une plage prédéterminée de pression. Des exemples de tels organes hydrauliques seront fournis dans la suite de la description.

La vanne de régulation 15 autorise en outre des valeurs différenciées de débit de régulation et/ou de première pression de régulation en fonction de la ou des voies de refoulement 14a-14g ouvertes, et donc en fonction de la fonction du système de pulvérisation 10 qui est activée. De cette manière, la valeur de première pression de régulation peut par exemple être adaptée pour chaque voie de refoulement secondaire 14b-14g, en fonction de la ou des plages prédéterminées de pression du ou des organes hydrauliques de ladite voie de refoulement secondaire 14b-14g.

La vanne de régulation 15 permet aussi de s'affranchir de toute difficulté relative à son dimensionnement en fonction de la pompe 13 et de ses régimes, ainsi que de tout compromis face aux exigences des différents organes hydrauliques des voies de refoulement secondaire 14b-14g. La vanne de régulation 15, qui est commune à toutes les voies de refoulement 14a-14g, c'est-à-dire à la fois aux voies de refoulement principal 14a et secondaire 14b-14g, permet aussi un gain de compacité du système de pulvérisation 10, limitant ainsi des volumes « morts » ou « résiduels » dans le circuit de liquide 12 et donc la quantité de liquide, notamment de liquide de traitement, ne pouvant pas être utilisé.

Le circuit de liquide 12 comprend par exemple aussi une cuve principale 20 destinée à contenir du liquide de traitement.

La cuve principale 20 est reliée à l'entrée 16 de la pompe 13 au moyen d'une voie d'aspiration 21a, dite principal. La pompe 13 peut ainsi aspirer du liquide de traitement provenant de la cuve principale 20 pour le refouler vers la ou les voies de refoulement 14a-14g ouvertes, notamment vers la ou les voies de refoulement principal 14a, de manière à alimenter les buses de pulvérisation 19 en liquide de traitement pour le pulvériser sur les végétaux à traiter du champ. Les buses de pulvérisation 19 sont ainsi conçues pour pulvériser du liquide de traitement sur les végétaux à traiter du champ, lorsque la voie d'aspiration principal 21a et la ou les voies de refoulement principal 14a sont ouvertes.

Le circuit de liquide 12 peut encore comprendre une ou plusieurs voies d'aspiration 21b-21c, dite secondaire, qui sont reliées, en aval, à l'entrée 16 de la pompe 13.

Lorsque le circuit de liquide 12 comprend plusieurs voies d'aspiration 21a-21c, lesdites voies d'aspiration 21a-21c sont par exemple chacune reliées, en aval, à l'entrée 16 de la pompe 13 par l'intermédiaire d'une vanne de d'aspiration 22a-22c conçue pour ouvrir et pour fermer l'accès à l'entrée 16 de la pompe 13 depuis ladite voie d'aspiration 21a-21c.

Une vanne d'aspiration 22a-22c différente relie par exemple chaque voie d'aspiration 21a-21c à l'entrée 16 de la pompe 13. Une ou plusieurs vannes d'aspiration 22a-22c communes à plusieurs voies d'aspiration 21a-21c peuvent aussi reliées lesdites voies de d'aspiration 21a-21c à l'entrée 16 de la pompe 13.

L'une 21b des voies d'aspiration secondaire 21b-21c comprend par exemple un connecteur hydraulique d'entrée 23 destiné à être connecté de manière réversible à une source de liquide externe au système de pulvérisation 10. De cette manière, lorsque ladite voie d'aspiration secondaire 21b est ouverte, la pompe 13 aspire du liquide externe au système de pulvérisation 10.

L'une 21c des voies d'aspiration secondaire 21b-21c comprend par exemple une ou plusieurs cuves de rinçage 24 destinées à contenir de l'eau claire. De cette manière, lorsque ladite voie d'aspiration secondaire 21c est ouverte, la pompe 13 aspire de l'eau claire provenant de la ou des cuves de rinçage 24 pour rincer ou nettoyer le système de pulvérisation 10.

La ou chaque voie de refoulement principal 14a comprend par exemple une ligne d'alimentation 50 reliant la sortie 17 de la pompe 13 aux buses de pulvérisation 19, de manière à les alimenter en liquide, notamment en liquide de pulvérisation. La ou chaque voie de refoulement principal 14a peut encore comprendre une vanne à trois voies 51, ainsi qu'une ligne de retour 52 reliant les buses de pulvérisation 19 à la vanne à trois voies 51. La vanne à trois voies 51 est en outre conçue pour, dans une première position, renvoyer le liquide circulant dans la ligne de retour 52 vers la ligne d'alimentation 50, et dans une deuxième position, envoyer le liquide circulant dans la ligne de retour 52 vers la cuve principale 20. Lorsque la vanne à trois voies 51 occupe la première position, la voie de refoulement principal 14a peut être régulée en débit ou en pression. Chaque buse de pulvérisation 19 peut encore être équipée d'une vanne (non représentée) conçue pour libérer ou bloquer l'alimentation de ladite buse de pulvérisation 19 en liquide provenant de la ligne d'alimentation 50. Lesdites vannes bloquent par exemple l'alimentation en liquide des buses de pulvérisation 19, lorsque la vanne à trois voies 51 occupe la deuxième position. Lorsque la vanne à trois voies 51 occupe la deuxième position, il est en revanche plus approprié de réguler la voie de refoulement principal 14a en pression.

L'une 14b des voies de refoulement secondaire 14b-14g comprend par exemple au moins une buse d'agitation 25 agencée à l'intérieur de la cuve principale 20, notamment en partie basse de ladite cuve principale 20 pour être immergée dans le liquide de traitement qu'elle contient. La ou les buses d'agitation 25 sont en outre conçues pour projeter le liquide refoulé par la pompe 13 dans le liquide de traitement de la cuve principale 20, lorsque ladite voie de refoulement secondaire 14b est ouverte et que la ou les buses d'agitation 25 sont immergées dans le liquide de traitement de la cuve principale 20. De cette manière, la ou les buses d'agitation 25 agitent, mélangent ou encore brassent le liquide de traitement contenu dans la cuve principale 20. Le liquide refoulé par la pompe 13 peut être du liquide de traitement provenant de la voie d'aspiration principale 21a ouverte. La ou les buses d'agitation 25 permettent ainsi de garantir le dosage du liquide de traitement aspiré pour être pulvérisé, notamment lorsqu'il s'agit de bouillie, c'est-à-dire d'un mélange d'eau claire et de produit phytosanitaire, qui peut décanter. Ladite voie de refoulement secondaire 14b assure ainsi une fonction d'agitation du système de pulvérisation 10. La ou les buses d'agitation 25 forment un exemple d'organes hydrauliques conçus pour fonctionner sur une plage prédéterminée de pression, de sorte qu'une régulation en pression de ladite voie de refoulement secondaire 14b par la vanne de régulation 15 est plus appropriée qu'une régulation en débit.

La vanne de refoulement 18b par l'intermédiaire de laquelle la voie de refoulement secondaire 14b assurant la fonction d'agitation est reliée à la sortie 17 de la pompe 13, est par exemple conçue pour réguler une pression de liquide dans ladite voie de refoulement secondaire 14b à une deuxième pression de régulation prédéterminée. De cette manière, lorsque la ou les voies de refoulement principal 14a sont ouvertes et que la vanne de régulation 15 régule par exemple la ou les voies de refoulement principal 14a en débit, ladite vanne de refoulement 18b peut quand même réguler ladite voie de refoulement secondaire 14b ouverte en pression. Lorsque la ou les voies de refoulement principal 14a sont ouvertes et que la vanne de régulation 15 régule par exemple la ou les voies de refoulement principal 14a en pression à la première pression de régulation, ladite vanne de refoulement 18b peut réguler ladite voie de refoulement secondaire 14b ouverte en pression à la deuxième pression de régulation dont la valeur peut être différente de celle de la première pression de régulation. Cela permet d'éviter au liquide, notamment au liquide de traitement, expulsé par la ou les buses d'agitation 25 d'atteindre une pression telle que cette expulsion de liquide fait mousser le liquide de traitement dans la cuve principale 20. Ladite vanne de refoulement 18b est notamment distincte de la ou des autres vannes de refoulement 18a, 18c-18g, qui peuvent n'être conçues que pour occuper une position ouverte et une position fermée.

L'une 14c des voies de refoulement secondaire 14b-14g comprend par exemple au moins une buse de rinçage 26 agencée à l'intérieur de la cuve principale 20, notamment en partie haute de ladite cuve principale 20. La ou les buses de rinçage 26 sont en outre conçues pour projeter le liquide refoulé par la pompe 13 à l'intérieur de la cuve principale 20, notamment sur des parois de ladite cuve principale 20, lorsque ladite voie de refoulement secondaire 14c est ouverte. De cette manière, la ou les buses de rinçage 26 permettent de rincer la cuve principale 20. Le liquide refoulé par la pompe 13 peut être de l'eau claire provenant de la ou des cuves de rinçages 24 de la voie d'aspiration secondaire 21c correspondante ouverte. Ladite voie de refoulement secondaire 14c assure ainsi une fonction de rinçage du système de pulvérisation 10. La ou les buses de rinçage 26 forment un exemple d'organes hydrauliques conçus pour fonctionner sur une plage prédéterminée de pression, de sorte qu'une régulation en pression de ladite voie de refoulement secondaire 14c par la vanne de régulation 15 est plus appropriée qu'une régulation en débit.

L'une 14d des voies de refoulement secondaire 14b-14g comprend par exemple un dispositif à effet Venturi 27 par l'intermédiaire duquel ladite voie de refoulement secondaire 14d relie la sortie 17 de la pompe 13 à la cuve principale 20. Le liquide refoulé par la pompe 13 circule ainsi à travers le dispositif à effet Venturi 27 jusqu'à la cuve principale 20. Ladite voie de refoulement secondaire 14d comprend encore un dispositif d'incorporation 28, notamment une trémie d'incorporation, destiné à contenir un produit à incorporer, tel que du produit phytosanitaire liquide ou sous forme de poudre. Le dispositif à effet Venturi 27 est en outre conçu pour aspirer le produit à incorporer contenu dans le dispositif d'incorporation 28, lorsque ladite voie de refoulement secondaire 14d est ouverte et que le liquide refoulé par la pompe 13 circule à travers le dispositif à effet Venturi 27. De cette manière, le produit aspiré par le dispositif à effet Venturi 27 est incorporé au liquide circulant à travers le dispositif à effet Venturi 27 pour remplir la cuve principale 20 d'un mélange dudit liquide et dudit produit. Le liquide refoulé par la pompe 13 peut être de l'eau claire provenant de la ou des cuves de rinçage 24 de la voie d'aspiration secondaire 21c correspondante ouverte ou, par l'intermédiaire du connecteur hydraulique d'entrée 23 de la voie d'aspiration secondaire 21b correspondante ouverte, d'une source d'eau claire externe au système de pulvérisation 10. Ladite voie de refoulement secondaire 14d assure ainsi une fonction d'incorporation de produit du système de pulvérisation agricole 10. Le dispositif à effet Venturi 27 forme un exemple d'organes hydrauliques conçus pour fonctionner sur une plage prédéterminée de pression, de sorte qu'une régulation en pression de ladite voie de refoulement secondaire 14d par la vanne de régulation 15 est plus appropriée qu'une régulation en débit.

L'une 14e des voies de refoulement secondaire 14b-14g relie par exemple la sortie 17 de la pompe 13 à la cuve principale 20, de manière à remplir la cuve principale 20 du liquide refoulé par la pompe 13. Le liquide refoulé par la pompe 13 peut être du liquide de traitement provenant, par l'intermédiaire du connecteur hydraulique d'entrée 23 de la voie d'aspiration secondaire 21b correspondante ouverte, d'une source de liquide de traitement externe au système de pulvérisation 10. Ladite voie de refoulement secondaire 14e assure ainsi une fonction de remplissage du système de pulvérisation 10. Une régulation en pression est plus avantageuse ici afin de protéger la canalisation formant ladite voie de refoulement secondaire 14e contre une surpression.

L'une 14f des voies de refoulement secondaire 14b-14g comprend par exemple un dispositif de nettoyage extérieur 29, tel qu'un pistolet hydraulique, de manière à nettoyer l'extérieur du système de pulvérisation 10 avec le liquide refoulé par la pompe 13. Le liquide refoulé par la pompe 13 peut être de l'eau claire provenant de la ou des cuves de rinçage 24 de la voie d'aspiration secondaire 21c correspondante ouverte ou, par l'intermédiaire du connecteur hydraulique d'entrée 23 de la voie d'aspiration secondaire 21b correspondante ouverte, d'une source d'eau claire externe au système de pulvérisation 10. Ladite voie de refoulement secondaire 14f assure ainsi une fonction de nettoyage extérieur du système de pulvérisation 10. Le dispositif de nettoyage extérieur 29 forme un exemple d'organes hydrauliques conçus pour fonctionner sur une plage prédéterminée de pression, de sorte qu'une régulation en pression de ladite voie de refoulement secondaire 14f par la vanne de régulation 15 est plus appropriée.

L'une 14g des voies de refoulement secondaire 14b-14g comprend par exemple un connecteur hydraulique de sortie 30 destiné à être connecté de manière réversible à une cuve externe au système de pulvérisation 10, de manière à transférer le liquide refoulé par la pompe 13 vers ladite cuve externe. Ladite voie de refoulement secondaire 14g assure ainsi une fonction de transfert du système de pulvérisation 10. Une régulation en pression est plus avantageuse ici afin de protéger la canalisation formant ladite voie de refoulement secondaire 14g contre une surpression.

Le système de pulvérisation 10 comprend par exemple encore une unité de commande 31 électronique.

L'unité de commande 31 peut comprendre une interface d'entrée, une interface de sortie, une mémoire de données, une mémoire de programmes, un microprocesseur ainsi qu'au moins un bus de communication qui les connecte entre eux.

L'interface d'entrée est par exemple connectée à une interface utilisateur (non représentée) par l'intermédiaire de laquelle un agriculteur communique avec l'unité de commande 31. L'interface utilisateur peut être installée dans une cabine du tracteur.

L'interface de sortie est par exemple connectée à la vanne de régulation 15, aux vannes de refoulement 18a-18g et le cas échéant aux vannes d'aspiration 22a-22c.

Une valeur de débit de régulation peut être enregistrée dans la mémoire de données. La valeur de débit de régulation peut être préenregistrée dans la mémoire de données, enregistrée dans la mémoire de données par l'agriculteur via l'interface utilisateur et/ou calculée et enregistrée dans la mémoire de données par l'unité de commande 31. Le calcul de la valeur de débit de régulation, à partir de données mesurées du système de pulvérisation 10 et de l'engin agricole, telles que leur vitesse d'avancement dans le champ de végétaux à traiter, est bien connu de l'homme du métier et ne sera donc pas détaillé ici. La valeur de débit de régulation est affectée au débit de régulation. Lorsque le système de pulvérisation 10 comprend plusieurs voies de refoulement principal 14a, la valeur de débit de régulation est par exemple commune auxdites voies de refoulement principal 14a.

Bien sûr, lorsque le système de pulvérisation 10 comprend une ou des voies de refoulement secondaire 14b-14g qu'il est plus approprié de réguler en débit, à la ou à chacune desdites voies de refoulement secondaire 14b-14g correspond par exemple une valeur de débit de régulation. La ou les valeur de débit de régulation correspondant à la ou lesdites voies de refoulement secondaire 14b-14g peuvent être enregistrées dans la mémoire de données, ces valeurs de débit de régulation pouvant être préenregistrées dans la mémoire de données et/ou enregistrées dans la mémoire de données par l'agriculteur via l'interface utilisateur. Ces valeurs de débit de régulation peuvent être différentes pour chacune desdites voies de refoulement secondaire 14b-14g ou communes à plusieurs desdites voies de refoulement secondaire 14b-14g.

Une ou plusieurs valeurs de première pression de régulation peuvent être enregistrées dans la mémoire de données. La ou les valeurs de première pression de régulation peuvent être préenregistrées dans la mémoire de données et/ou enregistrées dans la mémoire de données par l'agriculteur via l'interface utilisateur. A chaque voie de refoulement secondaire 14b-14g correspond par exemple une valeur de première pression de régulation. Ces valeurs de première pression de régulation peuvent être différentes pour chaque voie de refoulement secondaire 14b-14g ou communes à plusieurs voies de refoulement secondaire 14b-14g. Une valeur de première pression de régulation peut aussi correspondre à la ou aux voies de refoulement principal 14a.

Une ou plusieurs valeurs de deuxième pression de régulation peuvent être enregistrées dans la mémoire de données. La ou les valeurs de deuxième pression de régulation peuvent être préenregistrées dans la mémoire de données et/ou enregistrées dans la mémoire de données par l'agriculteur via l'interface utilisateur. La valeur de deuxième pression de régulation est par exemple affectée à la deuxième pression de régulation. En variante, chaque valeur de deuxième pression de régulation correspond à une plage de débit prédéterminée. Les plages de débit peuvent être enregistrées dans la mémoire de données. Les plages de débit et leur valeur de deuxième pression de régulation correspondante peuvent être préenregistrées dans la mémoire de données et/ou enregistrées dans la mémoire de données par l'agriculteur via l'interface utilisateur. La valeur de deuxième pression de régulation affectée à la deuxième pression de régulation dépend alors de la plage de débit.

L'unité de commande 31 peut être conçue pour commander la vanne de régulation 15 de réguler, sélectivement, en fonction de la ou des voies de refoulement 14a-14g ouvertes, en débit ou en pression la ou lesdites voies de refoulement 14a-14g ouvertes. De cette manière, les voies de refoulement 14a-14g sont régulées en débit ou en pression, en fonction de ce qui leur est le plus approprié.

L'unité de commande 31 peut notamment être conçue pour commander la vanne de régulation 15 de réguler en débit la ou les voies de refoulement 14a-14g ouvertes, lorsque l'une des voies de refoulement 14a-14g ouvertes est prédéterminée comme étant à réguler en débit, et de réguler en pression la ou les voies de refoulement 14a-14g ouvertes, lorsqu'aucune de la ou des voies de refoulement 14a-14g ouvertes n'est prédéterminée comme étant à réguler en débit.

La prédétermination de chaque voie de refoulement 14a-14g comme étant à réguler en débit ou en pression est par exemple préenregistrée dans la mémoire de données.

Comme indiqué précédemment, la ou les voies de refoulement principal 14a sont par exemple prédéterminées comme étant à réguler en débit, la fonction de pulvérisation agricole étant à réguler en débit. La ou chaque voie de refoulement principal 14a peut aussi être prédéterminée comme étant à réguler en pression, lorsque la vanne à trois voies 51 occupe la première position, et sélectivement prédéterminée comme étant à réguler en débit ou en pression, lorsque la vanne à trois voies 51 occupe la deuxième position. La sélection de la prédétermination de la ou de chaque voie de refoulement principal 14a comme étant à réguler en débit ou en pression peut alors être réalisée par l'agriculteur via l'interface utilisateur. La fonction de pulvérisation agricole peut alors être régulée en débit ou en pression.

Les voies de refoulement secondaire 14b-14g sont par exemple prédéterminées comme étant à réguler en pression. Les fonctions d'agitation, de rinçage, d'incorporation de produit, de remplissage, de nettoyage extérieur et/ou de transfert sont donc à réguler en pression.

L'unité de commande 31 peut encore être conçue pour :
- lorsque la ou l'une au moins des voies de refoulement 14a-14g ouvertes est prédéterminée comme étant à réguler en débit :
   ∘ le cas échéant, lorsque le système de pulvérisation 10 comprend une ou des voies de refoulement secondaire 14b-14g prédéterminées comme étant à réguler en débit, affecter au débit de régulation la valeur de débit de régulation correspondant à la ou auxdites voies de refoulement 14a-14g ouvertes ; puis
   ∘ commander la vanne de régulation 15 de réguler le débit de liquide dans ladite voie de refoulement 14a-14b ouverte au débit de régulation ;
- lorsqu'aucune de la ou des voies de refoulement 14a-14g ouvertes n'est prédéterminée comme étant à réguler en débit et que la ou les voies de refoulement 14a-14g ouvertes sont prédéterminées comme étant à réguler en pression :
   ∘ affecter à la première pression de régulation la valeur de première pression de régulation correspondant à la ou auxdites voies de refoulement 14a-14g ouvertes ; puis
   ∘ commander la vanne de régulation 15 de réguler la pression de liquide dans la ou les voies de refoulement 14a-14g ouvertes à la première pression de régulation ;
- le cas échéant, lorsque la voie de refoulement secondaire 14b assurant la fonction d'agitation est ouverte et qu'une ou plusieurs autres voies de refoulement 14a, 14c-14g, notamment la ou les voies de refoulement principal 14a, sont ouvertes :
   ∘ optionnellement, affecter à la deuxième pression de régulation la valeur de deuxième pression de régulation correspondant à la plage de débit dans laquelle le débit de liquide circulant dans la ou les voies de refoulement 14a-14g ouvertes, est compris, ce débit étant notamment mesuré par le débitmètre 32 qui sera décrit plus loin ; puis
   ∘ commander, en même temps que la vanne de régulation 15, la vanne de refoulement 18b par l'intermédiaire de laquelle ladite voie de refoulement secondaire 14b est reliée à la sortie 17 de la pompe 13, de réguler la pression de liquide dans ladite voie de refoulement secondaire 14b à la deuxième pression de régulation.

Le circuit de liquide 12 peut encore comprendre un débitmètre 32 conçu pour mesurer le débit de liquide en aval de la sortie 17 de la pompe 13, notamment du liquide circulant dans la ou les voies de refoulement principal 14a. Pour cela, le débitmètre 32 est installé en aval de la pompe 13, notamment le long de la ou d'une des voies de refoulement principal 14a. Le débitmètre 32 peut aussi être installé en amont des voies de refoulement 14a-14g. Le débitmètre 32 peut être connecté à l'interface d'entrée de l'unité de commande 31.

En variante, plusieurs débitmètres peuvent être prévus, chaque débitmètre étant conçu pour mesurer le débit du liquide circulant dans l'une des voies de refoulement 14a-14g, notamment dans l'une des voies de refoulement 14a-14g qui sont prédéterminées comme étant à réguler en débit. Pour cela, chaque débitmètre est installé en aval de la pompe 13, le long de la voie de refoulement 14a-14g dont il mesure le débit de liquide.

Le circuit de liquide 12 peut aussi comprendre un premier capteur de pression 33 conçu pour mesurer la pression du liquide en aval de la sortie 17 de la pompe 13 et en amont des voies de refoulement 14a-14g. Pour cela, le premier capteur de pression 33 est installé en aval de la sortie 17 de la pompe 13 et en amont des voies de refoulement 14a-14g. Le premier capteur de pression 33 peut être connecté à l'interface d'entrée de l'unité de commande 31.

En variante, plusieurs premiers capteurs de pression peuvent être prévus, chaque premier capteur de pression étant conçu pour mesurer la pression du liquide circulant dans l'une des voies de refoulement 14a-14g, notamment dans l'une des voies de refoulement 14a-14g qui sont prédéterminées comme étant à réguler en pression. Pour cela, chaque premier capteur de pression est installé en aval de la pompe 13, le long de la voie de refoulement 14a-14g dont il mesure la pression de liquide.

Le circuit de liquide 12 peut encore comprendre un deuxième capteur de pression 53 conçu pour mesurer la pression du liquide le long de la ou d'une des voies de refoulement principal 14a. Pourcela, le deuxième capteur de pression 53 est installé le long de ladite voie de refoulement principale 14a, notamment au plus près des buses de pulvérisation 19. Le deuxième capteur de pression 53 peut être connecté à l'interface d'entrée de l'unité de commande 31.

L'unité de commande 31 peut encore être conçue pour commander sélectivement, en fonction de la ou des voies de refoulement 14a-14g ouvertes :
- une ouverture et une fermeture de la vanne de régulation 15 en fonction du débit mesuré par le débitmètre 32, de manière à maintenir le débit de liquide dans la ou lesdites voies de refoulement 14a-14g ouvertes, globalement au débit de régulation,
   ou
- une ouverture et une fermeture de la vanne de régulation 15 en fonction de la pression mesurée par le premier capteur de pression 33 ou le deuxième capteur de pression 53, de manière à maintenir la pression de liquide dans la ou lesdites voies de refoulement 14a-14g ouvertes, globalement à la première pression de régulation.

Autrement dit, dans le cas d'une régulation en débit, la ou l'une des voies de refoulement 14a-14g ouvertes étant notamment prédéterminée comme étant à réguler en débit, lorsque le débit mesuré par le débitmètre 32 est inférieur au débit de régulation, l'unité de commande 31 commande à la vanne de régulation 15 de s'ouvrir davantage, de manière à augmenter le débit dans la ou les voies de refoulement 14a-14g ouvertes jusqu'à atteindre le débit de régulation. Lorsqu'au contraire, le débit mesuré par le débitmètre 32 est supérieur au débit de régulation, l'unité de commande 31 commande à la vanne de régulation 15 de se fermer davantage, de manière à diminuer le débit dans la ou les voies de refoulement 14a-14g ouvertes jusqu'à atteindre le débit de régulation. Il est ainsi possible de réguler le débit dans la ou les voies de refoulement 14a-14g ouvertes, et donc de le maintenir globalement au débit de régulation. Le débit dans la ou les voies de refoulement 14a-14g ouvertes oscille ainsi autour du débit de régulation, l'écart entre le débit de régulation et ces oscillations étant toutefois négligeable relativement au débit de régulation.

Dans le cas d'une régulation en pression, aucune de la ou des voies de refoulement 14a-14g ouvertes n'étant notamment prédéterminée comme étant à réguler en débit, lorsque la pression mesurée par le premier capteur de pression 33 ou le deuxième capteur de pression 53 est inférieur à la première pression de régulation, l'unité de commande 31 commande à la vanne de régulation 15 de se fermer davantage, de manière à augmenter la pression dans la ou les voies de refoulement 14a-14g ouvertes jusqu'à atteindre la première pression de régulation. Lorsqu'au contraire, la pression mesurée par le premier capteur de pression 33 ou le deuxième capteur de pression 53 est supérieure à la première pression de régulation, l'unité de commande 31 commande à la vanne de régulation 15 de s'ouvrir davantage, de manière à diminuer la pression dans la ou les voies de refoulement 14a-14g ouvertes jusqu'à atteindre la première pression de régulation. Il est ainsi possible de réguler la pression dans la ou les voies de refoulement 14a-14g ouvertes, et donc de la maintenir globalement à la première pression de régulation. On comprendra qu'une fois la pression dans la ou les voies de refoulement 14a-14g ouvertes a atteint la première pression de régulation, la pression dans la ou les voies de refoulement 14a-14g ouvertes oscille autour de la première pression de régulation, l'écart entre la première pression de régulation et ces oscillations étant toutefois négligeable relativement à la première pression de régulation. Le deuxième capteur de pression 53 ne sert à la régulation en pression que dans le cas où la ou les voies de refoulement principal 14a sont ouvertes et prédéterminées comme étant à réguler en pression. Le premier capteur de pression 32 sert dans les autres cas.

Le circuit de liquide 12 comprend par exemple aussi un troisième capteur de pression 34 conçu pour mesurer la pression du liquide en aval de la vanne de refoulement 18b par l'intermédiaire de laquelle la voie de refoulement secondaire 14b assurant la fonction d'agitation est reliée à la sortie 17 de la pompe 13. Pour cela, le troisième capteur de pression 34 est installé en aval de ladite vanne de refoulement 18b, le long de ladite voie de refoulement secondaire 14b. Le deuxième capteur de pression 34 peut être connecté à l'interface d'entrée de l'unité de commande 31. L'unité de commande 31 peut encore être conçue pour commander une ouverture et une fermeture de ladite vanne de refoulement 18b en fonction de la pression mesurée par le troisième capteur de pression 34, lorsque ladite voie de refoulement secondaire 14b est ouverte, de manière à maintenir la pression de liquide dans ladite voie de refoulement secondaire 14b, globalement à la deuxième pression de régulation. Le fonctionnement de la régulation en pression décrit ci-dessus par rapport à la vanne de régulation 15 est applicable mutatis mutandis à ladite vanne de refoulement 18b.

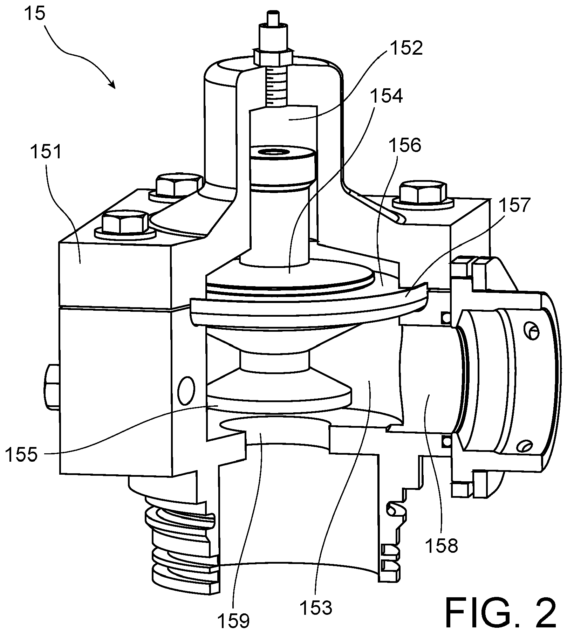

La figure 2 montre un exemple de vanne de régulation 15.

La vanne de régulation 15 comprend un corps de vanne 151 définissant une chambre d'air 152 et une chambre de liquide 153 séparées l'une de l'autre par un tiroir 154 comprenant un siège 155 agencé dans la chambre de liquide 153.

La vanne de régulation 15 peut aussi comprendre une membrane 156 solidaire d'une part du corps de vanne 151 sur sa partie périphérique 157, et d'autre part du tiroir 154 sur sa partie centrale.

La chambre d'air 152 communique par exemple avec un circuit pneumatique (non représenté) conçu pour piloter une pression d'air dans la chambre d'air 152.

Pour cela, le circuit pneumatique comprend par exemple une conduite d'alimentation en air par l'intermédiaire de laquelle la chambre d'air 152 est alimenté en air de manière à augmenter la pression d'air dans ladite chambre d'air 152, et une conduite d'échappement d'air par l'intermédiaire de laquelle de l'air est évacué de la chambre d'air 152 de manière à diminuer la pression d'air dans ladite chambre d'air 152. Les conduites d'alimentation et d'échappement peuvent chacune être pourvues d'une vanne conçue pour ouvrir et pour fermer ladite conduite d'alimentation ou d'échappement. Les vannes peuvent être connectées à l'interface de sortie de l'unité de commande 31. Le circuit pneumatique peut encore comprendre un quatrième capteur de pression 160 (figure 1) conçu pour mesurer la pression d'air dans la chambre d'air 152. Le quatrième capteur de pression 160 peut être connecté à l'interface d'entrée de l'unité de commande 31.

La chambre de liquide 153 comprend un orifice d'entrée 158 communiquant avec la sortie 17 de la pompe 13, ainsi qu'un orifice de sortie 159 communiquant avec l'entrée 16 de la pompe 13.

Le tiroir 154 est en outre apte à se déplacer dans le corps de vanne 151, pour rapprocher ou éloigner le siège 155 dudit tiroir 154 de l'orifice de sortie 159 de la chambre de liquide 153, en fonction d'une différence entre la pression d'air dans la chambre d'air 152 et une pression du liquide circulant dans la chambre de liquide 153, depuis l'orifice d'entrée 158 vers l'orifice de sortie 159. Ainsi, le pilotage de la pression d'air dans la chambre d'air 152 de la vanne de régulation 15 permet de faire varier le débit ou la pression de liquide traversant la vanne de régulation 15 et donc le débit ou la pression de liquide circulant dans la ou les voies de refoulement 14a-14g ouvertes.

L'unité de commande 31 peut aussi être conçue pour :
- déterminer une ou des voies de refoulement 14a-14g fermées à ouvrir et une ou des voies de refoulement 14a-14g ouvertes à fermer ;
- diminuer la pression d'air dans la chambre d'air 152 de la vanne de régulation 15, notamment en ouvrant la conduite d'échappement du circuit pneumatique au moyen de la vanne de ladite conduite d'échappement ;
- ouvrir la ou les voies de refoulement 14a-14g fermées à ouvrir et fermer la ou les voies de refoulement 14a-14g ouvertes à fermer, notamment au moyen des vannes de refoulement 18a-18g, simultanément ou successivement, dans un ordre ou dans l'autre ;
- le cas échéant, lorsque le système de pulvérisation 10 comprend une ou des voies de refoulement secondaire 14b-14g prédéterminées comme étant à réguler en
débit et que l'une au moins des voies de refoulement 14a-14g ouvertes est prédéterminée comme étant à réguler en débit, affecter au débit de régulation la valeur de débit de régulation correspondant à la ou auxdites voies de refoulement 14a-14g ouvertes ;
- le cas échéant, lorsqu'aucune de la ou des voies de refoulement 14a-14g ouvertes n'est prédéterminée comme étant à réguler en débit, affecter à la première pression de régulation la valeur de première pression de régulation correspondant à la ou auxdites voies de refoulement 14a-14g ouvertes ;
- augmenter la pression d'air dans la chambre d'air 152 de la vanne de régulation 15, notamment en ouvrant la conduite d'alimentation du circuit pneumatique au moyen de la vanne de ladite conduite d'alimentation, jusqu'à ce que sélectivement, en fonction de la ou des voies de refoulement 14a-14g ainsi ouvertes :
   ∘ le débit de liquide circulant dans la ou les voies de refoulement 14a-14g ouvertes atteigne le débit de régulation, notamment lorsque la ou l'une au moins des voies de refoulement 14a-14g ouvertes est prédéterminée comme étant à réguler en débit, ou
   ∘ la pression de liquide circulant dans la ou les voies de refoulement 14a-14g ouvertes atteigne la première pression de régulation, notamment lorsqu'aucune de la ou des voies de refoulement 14a-14g ouvertes n'est prédéterminée comme étant à réguler en débit ;
- réguler sélectivement, en fonction de la ou des voies de refoulement 14a-14g ouvertes :
   ∘ le débit de liquide circulant dans la ou les voies de refoulement 14a-14g ouvertes, au débit de régulation, notamment lorsque la ou l'une au moins des voies de refoulement 14a-14g ouvertes est prédéterminée comme étant à réguler en débit, ou
   ∘ la pression de liquide circulant dans la ou les voies de refoulement 14a-14g ouvertes à la première pression de régulation, notamment lorsqu'aucune de la ou des voies de refoulement 14a-14g ouvertes n'est prédéterminée comme étant à réguler en débit.

De cette manière, lorsque l'unité de commande 31 ouvre la ou les voies de refoulement 14a-14g fermées à ouvrir et ferme la ou les voies de refoulement 14a-14g ouvertes à fermer, la pression d'air dans la chambre d'air 152 de la vanne de régulation 15 est faible et les contraintes appliquées par la vanne de régulation 15 au liquide en aval de la pompe 13 sont réduites. Cela permet d'éviter toute surpression du liquide circulant dans le circuit de liquide 12, en aval de la pompe 13, qui pourrait conduire à un coup de bélier et donc à un endommagement du circuit de liquide 12. Une fois l'ouverture des voies de refoulement 14a-14g fermées à ouvrir et la fermeture des voies de refoulement 14a-14g ouvertes à fermer, la pression d'air dans la chambre d'air 152 de la vanne de régulation 15 peut être ré-augmentée en toute sécurité pour réguler en débit ou en pression la ou les voies de refoulement 14a-14g ainsi ouvertes. Les changements de fonction du système de pulvérisation 10 s'opèrent ainsi sans risque pour le circuit de liquide 12.

L'unité de commande 31 est par exemple conçue pour :
- recevoir des instructions d'ouverture d'une ou plusieurs voies de refoulement 14a-14g fermées et, le cas échéant, de fermeture d'une ou plusieurs voies de refoulement 14a-14g ouvertes ;
- déterminer, à partir desdites instructions reçues, la ou les voies de refoulement 14a-14g fermées à ouvrir et la ou les voies de refoulement 14a-14g ouvertes à fermer.

L'unité de commande 31 peut déterminer la ou les voies de refoulement 14a-14g ouvertes à fermer directement à partir d'instructions de fermeture d'une ou plusieurs voies de refoulement 14a-14g ouvertes ou indirectement à partir des instructions d'ouverture d'une ou plusieurs voies de refoulement 14a-14g fermées.

Les instructions d'ouverture d'une ou plusieurs voies de refoulement 14a-14g fermées et, le cas échéant, de fermeture d'une ou plusieurs voies de refoulement 14a-14g ouvertes peuvent être envoyées par l'agriculteur via l'interface utilisateur.

L'unité de commande 31 peut encore être conçue pour diminuer la pression d'air dans la chambre d'air 152 de la vanne de régulation 15 pendant une période cible prédéterminée. Une valeur de période cible peut être enregistrée dans la mémoire de données. La valeur de période cible peut être préenregistrée dans la mémoire de données et/ou enregistrée dans la mémoire de données par l'agriculteur via l'interface utilisateur. La valeur de période cible est affectée à la période cible. L'unité de commande 31 peut notamment être conçue pour ouvrir la conduite d'échappement du circuit pneumatique, notamment au moyen de la vanne de ladite conduite d'échappement, pendant la période cible, de manière à évacuer de l'air de la chambre d'air 152 de la vanne de régulation 15 et à diminuer la pression d'air dans ladite chambre d'air 152.

En variante, l'unité de commande 31 est conçue pour diminuer la pression d'air dans la chambre d'air 152 de la vanne de régulation 15 jusqu'à ce que ladite pression d'air atteigne une pression cible prédéterminée, notamment jusqu'à que la pression d'air mesurée par le quatrième capteur de pression 160 atteigne la pression cible. Une valeur de pression cible peut être enregistrée dans la mémoire de données. La valeur de pression cible peut être préenregistrée dans la mémoire de données et/ou enregistrée dans la mémoire de données par l'agriculteur via l'interface utilisateur. La valeur de pression cible est affectée à la pression cible. L'unité de commande 31 peut notamment être conçue pour ouvrir la conduite d'échappement du circuit pneumatique, notamment au moyen de la vanne de ladite conduite d'échappement, jusqu'à atteindre la pression cible.

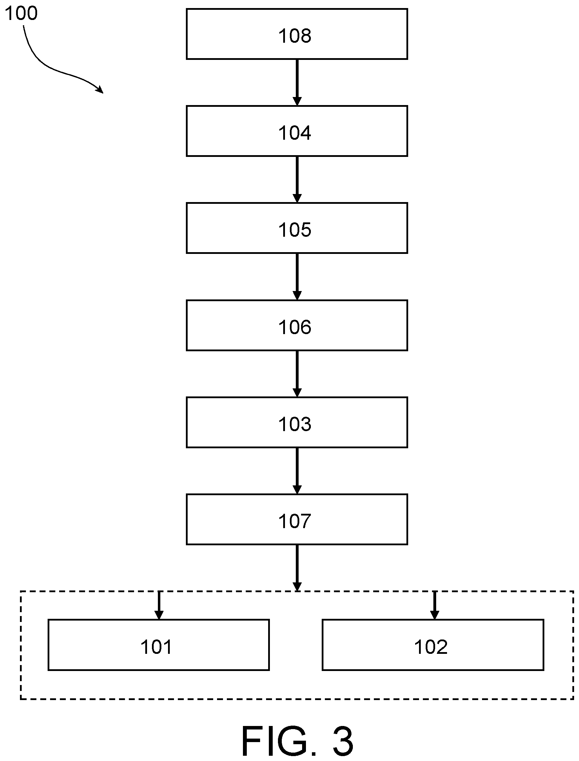

La figure 3 montre un procédé 100 de pilotage du système de pulvérisation 10. Le procédé 100 peut être enregistré dans la mémoire de programmes de l'unité de commande 31.

Le procédé 100 comprend une étape 101 de régulation sélective, au moyen de la vanne de régulation 15, en fonction de la ou des voies de refoulement 14a-14g ouvertes, du débit de liquide circulant dans la ou les voies de refoulement 14a-14g ouvertes au débit de régulation, notamment lorsque la ou l'une au moins des voies de refoulement 14a-14g ouvertes est prédéterminée comme étant à réguler en débit, ou de la pression de liquide circulant dans la ou les voies de refoulement 14a-14g ouvertes à la première pression de régulation, notamment lorsqu'aucune de la ou des voies de refoulement 14a-14g ouvertes n'est prédéterminée comme étant à réguler en débit.

Lorsque la voie de refoulement secondaire 14b assurant la fonction d'agitation est ouverte et qu'une ou plusieurs autres voies de refoulement 14a, 14c-14g, notamment la ou les voies de refoulement principal 14a, sont ouvertes, le procédé 100 comprend par exemple encore une étape 102 de régulation, au moyen de la vanne de refoulement 18b reliant la sortie 17 de la pompe 13 à ladite voie de refoulement secondaire 14b, de la pression de liquide dans ladite voie de refoulement secondaire 14b à la deuxième pression de régulation. L'étape 101 de régulation sélective et l'étape 102 de régulation de la pression dans ladite voie de refoulement secondaire 14b sont mises en oeuvre en même temps. Optionnellement, préalablement à l'étape de 102 de régulation, le procédé 100 comprend une étape (non représentée) d'affectation à la deuxième pression de régulation, de la valeur de deuxième pression de régulation correspondant à la plage de débit dans laquelle le débit de liquide circulant dans la ou les voies de refoulement 14a-14g ouvertes, notamment mesuré par le débitmètre 32, est compris.

Lorsque le système de pulvérisation 10 comprend une ou des voies de refoulement secondaire 14b-14g prédéterminées comme étant à réguler en débit et que l'une au moins des voies de refoulement 14a-14g ouvertes est prédéterminée comme étant à réguler en débit, le procédé 100 comprend par exemple une étape (non représentée) d'affectation de la valeur de débit de régulation correspondant à la ou auxdites voies de refoulement 14a-14g ouvertes, au débit de régulation.

Lorsqu'aucune de la ou des voies de refoulement 14a-14g ouvertes n'est prédéterminée comme étant à réguler en débit, le procédé 100 comprend par exemple, préalablement à l'étape 101 de régulation sélective, une étape 103 d'affectation de la valeur de première pression de régulation correspondant à la ou auxdites voie de refoulement 14a-14g ouvertes, à la première pression de régulation.

Le procédé 100 peut aussi comprendre, préalablement à l'étape 101 de régulation sélective :
- une étape 104 de détermination d'une ou de voies de refoulement 14a-14g fermées à ouvrir et d'une ou de voies de refoulement 14a-14g ouvertes à fermer ;
- une étape 105 de diminution de la pression d'air dans la chambre d'air 152 de la vanne de régulation 15 ;
- une étape 106 d'ouverture de la ou des voies de refoulement 14a-14g fermées à ouvrir et de fermeture de la ou des voies de refoulement 14a-14g ouvertes à fermer, simultanément ou successivement, dans un ordre ou dans l'autre ;
- le cas échéant, lorsque le système de pulvérisation 10 comprend une ou des voies de refoulement secondaire 14b-14g prédéterminées comme étant à réguler en débit et que l'une au moins des voies de refoulement 14a-14g ouvertes est prédéterminée comme étant à réguler en débit, l'étape d'affectation de la valeur de débit de régulation correspondant à la ou auxdites voies de refoulement 14a-14g ouvertes, au débit de régulation ;
- le cas échéant, lorsqu'aucune de la ou des voies de refoulement 14a-14g ouvertes n'est prédéterminée comme étant à réguler en débit, l'étape 103 d'affectation de la valeur de première pression de régulation correspondant à la ou auxdites voies de refoulement 14a-14g ouvertes, à la première pression de régulation ;
- une étape 107 d'augmentation de la pression d'air dans la chambre d'air 152 de la vanne de régulation 15 jusqu'à ce que sélectivement, en fonction de la ou des voies de refoulement 14a-14g ainsi ouvertes :
   ∘ le débit de liquide circulant dans la ou les voies de refoulement 14a-14g ouvertes atteigne le débit de régulation, notamment lorsque la ou l'une au moins des voies de refoulement 14a-14g ouvertes est prédéterminée comme étant à réguler en débit, ou
   ∘ la pression de liquide circulant dans la ou les voies de refoulement 14a-14g ouvertes atteigne la première pression de régulation, notamment lorsqu'aucune de la ou des voies de refoulement 14a-14g ouvertes n'est prédéterminée comme étant à réguler en débit.

Le procédé 100 peut aussi comprendre une étape 108 de réception d'instructions d'ouverture d'une ou plusieurs voies de refoulement 14a-14g fermées et, le cas échéant, de fermeture d'une ou plusieurs voies de refoulement 14a-14g ouvertes, la ou les voies de refoulement 14a-14g fermées à ouvrir et la ou les voies de refoulement 14a-14g ouvertes à fermer étant alors déterminées à l'étape 104 correspondante à partir desdites instructions. Lesdites instructions sont par exemple envoyées par l'agriculteur via l'interface utilisateur. La ou les voies de refoulement 14a-14g ouvertes à fermer peuvent en outre être déterminées directement à partir d'instructions de fermeture d'une ou plusieurs voies de refoulement 14a-14g ouvertes ou indirectement à partir des instructions d'ouverture d'une ou plusieurs voies de refoulement 14a-14g fermées.

La pression d'air dans la chambre d'air 152 de la vanne de régulation 15 est par exemple diminuée à l'étape 105 correspondante pendant une période cible prédéterminée. Pour cela, la conduite d'échappement du circuit pneumatique peut être ouverte pendant la période cible, de manière à évacuer de l'air de la chambre d'air 152 de la vanne de régulation 15 et à diminuer la pression d'air dans ladite chambre d'air 152.

En variante, la pression d'air dans la chambre d'air 152 de la vanne de régulation 15 est diminuée à l'étape 105 correspondante jusqu'à ce que ladite pression d'air atteigne une pression cible prédéterminée, notamment jusqu'à que la pression d'air mesurée par le quatrième capteur de pression 160 soit égale à la pression cible. La conduite d'échappement du circuit pneumatique peut être ouverte jusqu'à atteindre la pression cible.

## Revendications

1. Système de pulvérisation (10) pour engin agricole, comprend une rampe de pulvérisation (11), une unité de commande (31) et un circuit de liquide (12) comprenant lui-même :
- une pompe (13) comprenant une entrée (16) et une sortie (17), la pompe (13) étant conçue pour aspirer un liquide par l'entrée (16) et pour refouler le liquide aspiré à travers la sortie (17),
- des voies de refoulement (14a-14g) chacune reliées, en amont, à la sortie (17) de la pompe (13) par l'intermédiaire d'une vanne de refoulement (18a-18g) conçue pour ouvrir et pour fermer ladite voie de refoulement (14a-14g), l'une (14a) au moins des voies de refoulement (14a-14g), dite principal, comprenant des buses de pulvérisation (19) montées sur la rampe de pulvérisation (11) et conçues pour pulvériser du liquide sur des végétaux à traiter d'un champ, la ou les autres voies de refoulement (14b-14g), dite secondaire, étant dépourvues de buses de pulvérisation montées sur la rampe de pulvérisation (11),
- une vanne de régulation (15), la vanne de régulation (15) étant reliée, en amont, à la sortie (17) de la pompe (13) et, en aval, à l'entrée (16) de la pompe (13), la vanne de régulation (15) étant en outre conçue pour réguler sélectivement, en fonction de la ou desdites voies de refoulement (14a-14g) ouvertes, un débit de liquide dans la ou les voies de refoulement (14a-14g) ouvertes à un débit de régulation prédéterminé, ou une pression de liquide dans la ou les voies de refoulement (14a-14g) ouvertes à une première pression de régulation prédéterminée, le système de pulvérisation (10) étant **caractérisé en ce que** l'unité de commande (31) est conçue pour commander la vanne de régulation (15) de réguler en débit la ou les voies de refoulement (14a-14g) ouvertes, lorsque l'une au moins des voies de refoulement (14a-14g) ouvertes est prédéterminée comme étant à réguler en débit, et de réguler en pression la ou les voies de refoulement (14a-14g) ouvertes, lorsqu'aucune de la ou des voies de refoulement (14a-14g) ouvertes n'est prédéterminée comme étant à réguler en débit.

2. Système de pulvérisation (10) selon la revendication 1, dans lequel la ou les voies de refoulement principal (14a) sont prédéterminées comme étant à réguler en débit et la ou les voies de refoulement secondaire (14b-14g) sont prédéterminées comme étant à réguler en pression.

3. Système de pulvérisation (10) selon la revendication 1 ou la revendication 2, dans lequel la vanne de régulation (15) comprend un corps de vanne (151) définissant une chambre d'air (152) et une chambre de liquide (153) séparées l'une de l'autre par un tiroir (154) comprenant un siège (155) agencé dans la chambre de liquide (153), la chambre de liquide (153) comprend un orifice d'entrée (158) communiquant avec la sortie (17) de la pompe (13) et un orifice de sortie (159) communiquant avec l'entrée (16) de la pompe (13), le tiroir (154) étant en outre apte à se déplacer dans le corps de vanne (151), en fonction d'une différence entre une pression d'air dans la chambre d'air (152) et une pression du liquide circulant dans la chambre de liquide (153), depuis l'orifice d'entrée (158) vers l'orifice de sortie (159), de manière à approcher ou à éloigner le siège (155) de l'orifice de sortie (159).

4. Système de pulvérisation (10) selon la revendication 3, comprenant une unité de commande (31) conçue pour :
- déterminer une ou des voies de refoulement (14a-14g) fermées à ouvrir et une ou des voies de refoulement (14a-14g) ouvertes à fermer ;
- diminuer la pression d'air dans la chambre d'air (152) de la vanne de régulation (15);
- ouvrir la ou les voies de refoulement (14a-14g) fermées à ouvrir et fermer la ou les voies de refoulement (14a-14g) ouvertes à fermer, simultanément ou successivement, dans un ordre ou dans l'autre ;
- augmenter la pression d'air dans la chambre d'air (152) de la vanne de régulation (15), jusqu'à ce que sélectivement, en fonction de la ou des voies de refoulement (14a-14g) ainsi ouvertes :
∘ le débit de liquide circulant dans la ou les voies de refoulement (14a-14g) ouvertes atteigne le débit de régulation, ou
∘ la pression de liquide circulant dans la ou les voies de refoulement 14a-14g ouvertes atteigne la première pression de régulation.

5. Système de pulvérisation (10) selon la revendication 4, dans lequel l'unité de commande (31) est conçue pour diminuer la pression d'air dans la chambre d'air (152) de la vanne de régulation (15) pendant une période cible prédéterminée ou jusqu'à ce que ladite pression d'air atteigne une pression cible prédéterminée.

6. Procédé (100) de pilotage d'un système de pulvérisation (10) pour engin agricole selon l'une des revendications 1 à 5, comprenant une étape (101) de régulation sélective, au moyen de la vanne de régulation (15), en fonction de la ou des voies de refoulement (14a-14g) ouvertes, du débit de liquide circulant dans la ou les voies de refoulement (14a-14g) ouvertes au débit de régulation, ou de la pression de liquide circulant dans la ou les voies de refoulement (14a-14g) ouvertes à la première pression de régulation **caractérisé en ce que**, pendant l'étape (101) de régulation sélective, le débit de liquide circulant dans la ou les voies de refoulement (14a-14g) ouvertes, est régulé au débit de régulation, lorsque la ou l'une au moins des voies de refoulement (14a-14g) ouvertes est prédéterminée comme étant à réguler en débit, et la pression de liquide circulant dans la ou les voies de refoulement (14a-14g) ouvertes est régulée à la première pression de régulation, lorsqu'aucune de la ou des voies de refoulement (14a-14g) ouvertes n'est prédéterminée comme étant à réguler en débit.

7. Procédé (100) selon la revendication 6, le système de pulvérisation (10) étant conforme à l'une des revendications 3 à 5, comprenant, préalablement à l'étape (101) de régulation sélective :
- une étape (104) de détermination d'une ou de voies de refoulement (14a-14g) fermées à ouvrir et d'une ou de voies de refoulement (14a-14g) ouvertes à fermer ;
- une étape (105) de diminution de la pression d'air dans la chambre d'air (152) de la vanne de régulation (15) ;
- une étape (106) d'ouverture de la ou des voies de refoulement (14a-14g) fermées à ouvrir et de fermeture de la ou des voies de refoulement (14a-14g) ouvertes à fermer, simultanément ou successivement, dans un ordre ou dans l'autre ;
- une étape (107) d'augmentation de la pression d'air dans la chambre d'air (152) de la vanne de régulation (15) jusqu'à ce que, sélectivement, en fonction de la ou des voies de refoulement (14a-14g) ainsi ouvertes, le débit de liquide circulant dans la ou les voies de refoulement (14a-14g) ouvertes atteigne le débit de régulation, ou la pression de liquide circulant dans la ou les voies de refoulement (14a-14g) ouvertes atteigne la première pression de régulation.

8. Procédé (100) selon la revendication 7, dans lequel, pendant l'étape (104) de diminution, la pression d'air dans la chambre d'air (152) de la vanne de régulation (15) est diminuée pendant une période cible prédéterminée ou jusqu'à ce que ladite pression d'air atteigne une pression cible prédéterminée.

## Patentansprüche

1. Sprühsystem (10) für eine landwirtschaftliche Maschine, umfassend ein Sprühgestänge (11), eine Steuereinheit (31) und einen Flüssigkeitskreis (12), der selbst umfasst:
- eine Pumpe (13), die einen Einlass (16) und einen Auslass (17) umfasst, wobei die Pumpe (13) dazu ausgelegt ist, eine Flüssigkeit durch den Einlass (16) anzusaugen und die angesaugte Flüssigkeit durch den Auslass (17) auszustoßen,
- Ausstoßwege (14a-14g), die jeweils stromaufwärts mit dem Auslass (17) der Pumpe (13) über ein Ausstoßventil (18a-18g) verbunden sind, das ausgelegt ist, um den Ausstoßweg (14a-14g) zu öffnen und zu schließen, wobei mindestens einer (14a) der als Hauptweg bezeichneten Ausstoßwege (14a-14g) Sprühdüsen (19) umfasst, die auf dem Sprühgestänge (11) angebracht und dazu ausgelegt sind, eine Flüssigkeit auf zu behandelnde Pflanzen eines Feldes zu sprühen, wobei der oder die anderen als sekundär bezeichneten Ausstoßwege (14b-14g) keine auf dem Sprühgestänge (11) angebrachten Sprühdüsen haben,
- ein Einstellventil (15), wobei das Einstellventil (15) stromaufwärts mit dem Auslass (17) der Pumpe (13) und stromabwärst mit dem Einlass (16) der Pumpe (13) verbunden ist, wobei das Einstellventil (15) ferner ausgelegt ist, um selektiv in Abhängigkeit von dem oder den geöffneten Ausstoßwegen (14a-14g) einen Flüssigkeitsdurchsatz in dem oder den geöffneten Ausstoßwegen (14a-14g) auf einen vorher festgelegten Regeldurchsatz oder einen Flüssigkeitsdruck in dem oder den geöffneten Ausstoßwegen (14a-14g) auf einen ersten vorher festgelegten Regeldruck einzustellen, wobei das Sprühsystem (10) **dadurch gekennzeichnet ist, dass** die Steuereinheit (31) ausgelegt ist, um das Einstellventil (15) zu steuern, den Durchsatz des oder der geöffneten Ausstoßwege (14a-14g) einzustellen, wenn mindestens einer der geöffneten Ausstoßwege (14a-14g) vorbestimmt ist, durchsatzmäßig eingestellt zu werden, und den Druck des oder der geöffneten Ausstoßwege (14a-14g) einzustellen, wenn keiner von dem oder den geöffneten Ausstoßwegen (14a-14g) vorbestimmt ist, durchsatzmäßig eingestellt zu werden.

2. Sprühsystem (10) nach Anspruch 1, wobei der oder die Hauptausstoßwege (14a) vorbestimmt sind, durchsatzmäßig eingestellt zu werden und der oder die sekundären Ausstoßwege (14b-14g) vorbestimmt sind, druckmäßig eingestellt zu werden.

3. Sprühsystem (10) nach Anspruch 1 oder Anspruch 2, wobei das Einstellventil (15) einen Ventilkörper (151) umfasst, der eine Luftkammer (152) und eine Flüssigkeitskammer (153) definiert, die voneinander durch einen Schieber (154) getrennt sind, der einen Sitz (155) umfasst, der in der Flüssigkeitskammer (153) eingerichtet ist, wobei die Flüssigkeitskammer (153) eine Einlassöffnung (158) umfasst, die mit dem Auslass (17) der Pumpe (13) kommuniziert, und eine Auslassöffnung (159), die mit dem Einlass (16) der Pumpe (13) kommuniziert, wobei der Schieber (154) ferner imstande ist, sich im Ventilkörper (151) in Abhängigkeit von einer Differenz zwischen einem Druck der Luft in der Luftkammer (152) und einem Druck der Flüssigkeit, die in der Flüssigkeitskammer (153) zirkuliert, von der Einlassöffnung (158) zu der Auslassöffnung (159) derart zu verlagern, dass der Sitz (155) der Auslassöffnung (159) angenähert oder von ihr entfernt wird.

4. Sprühsystem (10) nach Anspruch 3, umfassend eine Steuereinheit (31), die ausgelegt ist, um:
- einen oder mehrere geschlossene Ausstoßwege (14a-14g), die zu öffnen sind, oder einen oder mehrere geöffnete Ausstoßwege (14a-14g), die zu schließen sind, zu bestimmen;
- den Luftdruck in der Luftkammer (152) des Einstellventils (15) zu senken;
- den oder die zu öffnenden geschlossenen Ausstoßwege (14a-14g) zu öffnen und den oder die zu schließenden geöffneten Ausstoßwege (14a-14g) zu schließen, gleichzeitig oder nacheinander in einer Reihenfolgen oder in der anderen;
- den Luftdruck in der Luftkammer (152) des Einstellventils (15) zu erhöhen, bis selektiv in Abhängigkeit von dem oder den somit geöffneten Ausstoßwegen (14a-14g):
o der Durchsatz der Flüssigkeit, die in dem oder den geöffneten Ausstoßwegen (14a-14g) zirkuliert, den Regeldurchsatz erreicht,
oder
o der Druck der Flüssigkeit, die in dem oder den geöffneten Ausstoßwegen (14a-14g) zirkuliert, den ersten Regeldruck erreicht.

5. Sprühsystem (10) nach Anspruch 4, wobei die Steuereinheit (31) ausgelegt ist, um den Luftdruck in der Luftkammer (152) des Einstellventils (15) während eines vorher festgelegten Zielzeitraums oder bis der Luftdruck einen vorher festgelegten Zieldruck erreicht, zu senken.

6. Verfahren (100) zum Steuern eines Sprühsystems (10) für eine landwirtschaftliche Maschine nach einem der Ansprüche 1 bis 5, umfassend einen Schritt (101) des selektiven Einstellens, mit Hilfe des Einstellventils (15), in Abhängigkeit von dem oder den geöffneten Ausstoßwegen (14a-14g), des Durchsatzes der Flüssigkeit, die in dem oder den geöffneten Ausstoßwegen (14a-14g) mit dem Regeldurchsatz zirkuliert, oder des Drucks der Flüssigkeit, die in dem oder den geöffneten Ausstoßwegen (14a-14g) mit dem ersten Regeldruck zirkuliert, **dadurch gekennzeichnet, dass** während des Schritts (101) des selektiven Einstellens der Durchsatz der Flüssigkeit, die in dem oder den geöffneten Ausstoßwegen (14a-14g) zirkuliert, auf den Regeldurchsatz eingestellt wird, wenn der oder mindestens einer der geöffneten Ausstoßwege (14a-14g) vorbestimmt ist, durchsatzmäßig eingestellt zu werden, und der Druck der Flüssigkeit, die in dem oder den geöffneten Ausstoßwegen (14a-14g) zirkuliert, auf den ersten Regeldruck eingestellt wird, wenn keiner von dem oder den geöffneten Ausstoßwegen (14a-14g) vorbestimmt ist, durchsatzmäßig eingestellt zu werden.

7. Verfahren (100) nach Anspruch 6, wobei das Sprühsystem (10) einem der Ansprüche 3 bis 5 entspricht, umfassend vor dem Schritt (101) des selektiven Einstellens:
- einen Schritt (104) des Bestimmens eines oder mehrerer geschlossener Ausstoßwege (14a-14g), die zu öffnen sind, oder eines oder mehrerer geöffneter Ausstoßwege (14a-14g), die zu schließen sind;
- einen Schritt (105) des Senkens des Luftdrucks in der Luftkammer (152) des Einstellventils (15);
- einen Schritt (106) des Öffnens des oder der zu öffnenden geschlossenen Ausstoßwege (14a-14g) und des Schließens des oder der zu schließenden geöffneten Ausstoßwege (14a-14g), gleichzeitig oder nacheinander in einer Reihenfolgen oder in der anderen;
- einen Schritt (107) des Erhöhens des Luftdrucks in der Luftkammer (152) des Einstellventils (15), bis selektiv in Abhängigkeit von dem oder den somit geöffneten Ausstoßwegen (14a-14g) der Durchsatz der Flüssigkeit, der in dem oder den geöffneten Ausstoßwegen (14a-14g) zirkuliert, den Regeldurchsatz erreicht, oder der Druck der Flüssigkeit, die in dem oder den geöffneten Ausstoßwegen (14a-14g) zirkuliert, den ersten Regeldruck erreicht.

8. Verfahren (100) nach Anspruch 7, wobei während des Schritts (104) des Senkens der Luftdruck in der Luftkammer (152) des Einstellventils (15) während eines vorher festgelegten Zielzeitraums oder bis der Luftdruck einen vorher festgelegten Zieldruck erreicht, gesenkt wird.

## Claims

1. A spraying system (10) for an agricultural machine, comprises a spray ramp (11), a control unit (31) and a liquid circuit (12) itself comprising:
- a pump (13) comprising an inlet (16) and an outlet (17), the pump (13) being designed to suck a liquid through the inlet (16) and to discharge the sucked liquid through the outlet (17),
- discharge paths (14a-14g) each connected, upstream, to the outlet (17) of the pump (13) through a discharge valve (18a-18g) designed to open and close said discharge path (14a-14g), at least one (14a) of the discharge paths (14a-14g), called a main discharge path, comprising spray nozzles (19) mounted to the spray ramp (11) and designed to spray liquid onto plants of a field to be treated, the other discharge path(s) (14b-14g), called secondary discharge path(s), being devoid of spray nozzles mounted to the spray ramp (11),
- a regulation valve (15),
the regulation valve (15) being connected, upstream, to the outlet (17) of the pump (13) and, downstream, to the inlet (16) of the pump (13), the regulation valve (15) being further designed to selectively regulate, as a function of said open discharge path(s) (14a-14g), a liquid flow rate in the open discharge path(s) (14a-14g) to a predetermined regulation flow rate, or a liquid pressure in the open discharge path(s) (14a-14g) to a first predetermined regulating pressure, the spraying system (10) being **characterised in that** the control unit (31) is designed to command the regulation valve (15) to flow-regulate the open discharge path(s) (14a-14g), when at least one of the open discharge path(s) (14a-14g) is predetermined as being to be flow-regulated, and to pressure-regulate the open discharge path(s) (14a-14g) when none of the open discharge path(s) (14a-14g) is predetermined as being to be flow-regulated.

2. The spraying system (10) according to claim 1, wherein the one or more main discharge paths (14a) is (are) predetermined as being to be flow-regulated and the one or more secondary discharge paths (14b-14g) is (are) predetermined as being to be pressure-regulated.

3. The spraying system (10) according to claim 1 or claim 2, wherein the regulation valve (15) comprises a valve body (151) defining an air chamber (152) and a liquid chamber (153) separated from each other by a slide valve (154) comprising a seat (155) arranged in the liquid chamber (153), the liquid chamber (153) comprises an inlet port (158) communicating with the outlet (17) of the pump (13) and an outlet port (159) communicating with the inlet (16) of the pump (13), the slide valve (154) being further designed to move in the valve body (151), as a function of a difference between an air pressure in the air chamber (152) and a pressure of the liquid circulating in the liquid chamber (153), from the inlet port (158) toward the outlet port (159), so as to move the seat (155) toward or away from the outlet port (159).

4. The spraying system (10) according to claim 3, comprising a control unit (31) designed to:
- determine one or more closed discharge path(s) (14a-14g) to open and one or more open discharge path(s) (14a-14g) to close;
- decrease air pressure in the air chamber (152) of the regulation valve (15);
- open the one or more closed discharge path(s) (14a-14g) to open and close the one or more open discharge path(s) (14a-14g) to close, simultaneously or successively, in either order;
- increase air pressure in the air chamber (152) of the regulation valve (15), until selectively, as a function of the discharge path(s) (14a-14g) thus opened:
∘ the flow rate of liquid circulating in the open discharge path(s) (14a-14g) reaches the regulation flow rate,
or
∘ the pressure of liquid circulating in the open discharge conduit(s) (14a-14g) reaches the first regulation pressure.

5. The spraying system (10) according to claim 4, wherein the control unit (31) is designed to decrease air pressure in the air chamber (152) of the regulation valve (15) for a predetermined target period or until said air pressure reaches a predetermined target pressure.

6. A method (100) for piloting a spraying system (10) for an agricultural machine according to one of claims 1 to 5, comprising a step (101) of selectively regulating, by means of the regulation valve (15), as a function of the open discharge path(s) (14a-14g), the flow rate of liquid circulating in the open discharge path(s) (14a-14g) to the regulation flow rate, or the pressure of liquid circulating in the open discharge path(s) (14a-14g) to the first regulation pressure, **characterised in that**, during the selective regulation step (101), the flow rate of liquid circulating in the open discharge path(s) (14a-14g) is regulated to the regulation flow rate, when the or at least one of the open discharge path(s) (14a-14g) is predetermined as being to be flow-regulated, and the pressure of liquid circulating in the open discharge path(s) (14a-14g) is regulated to the first regulating pressure, when none of the open discharge path(s) (14a-14g) is predetermined as being to be flow-regulated.

7. The method (100) according to claim 6, the spraying system (10) being in accordance with any claims 3 to 5, comprising, prior to the selective regulation step (101):
- a step (104) of determining one or more closed discharge path(s) (14a-14g) to open and one or more open discharge path(s) (14a-14g) to close;
- a step (105) of decreasing air pressure in the air chamber (152) of the regulation valve (15);
- a step (106) of opening the one or more closed discharge path(s) (14a-14g) to open and closing the one or more open discharge path(s) (14a-14g) to close, simultaneously or successively, in either order;
- a step (107) of increasing air pressure in the air chamber (152) of the regulation valve (15) until, selectively, as a function of the discharge path(s) (14a-14g) thus opened, the flow rate of liquid circulating in the open discharge path(s) (14a-14g) reaches the regulation flow rate, or the pressure of liquid circulating in the open discharge path(s) (14a-14g) reaches the first regulation pressure.

8. The method (100) according to claim 7, wherein during the decrease step (104), the air pressure in the air chamber (152) of the regulation valve (15) is decreased for a predetermined target period or until said air pressure reaches a predetermined target pressu re.
